# EUROPÄISCHE PATENTANMELDUNG

(11) **EP 3 006 138 A1**
(43) Veröffentlichungstag der Anmeldung: **13.04.2016**
(21) Anmeldenummer: 14003475.2
(22) Anmeldetag: 09.10.2014
(51) Int. Cl.: B22F 3/10, B22F 3/105

(54) **Verfahren zum schichtweisen Herstellen eines metallischen Werkstücks durch laserunterstützte additive Fertigung**

(71) Anmelder: Linde Aktiengesellschaft, 80331 München (DE)
(72) Erfinder: Miklos, Ernst, 85551 Kirchheim (DE); Fieret, Jim, Hook Norton, Großbritannien OX15 5PS (GB)
(74) Vertreter: Kasseckert, Rainer

(57) **Zusammenfassung**

Es wird ein Verfahren zum schichtweisen Herstellen eines metallischen Werkstücks durch additive Fertigung vorgeschlagen, bei dem metallurgische Schichten des Werkstücks erzeugt werden, indem für jede metallurgische Schicht pulverförmig metallischer Werkstoff bereitgestellt und mit einem Laserstrahl beaufschlagt wird, wobei der jeweils mit dem Laserstrahl beaufschlagten Schicht des pulverförmigen metallischen Werkstoffs ein Prozessgas zugeführt wird. Es ist vorgesehen, dass das Prozessgas für unterschiedliche metallurgische Schichten des Werkstücks mit unterschiedlicher Gaszusammensetzung verwendet wird und dass für jeweils benachbarte metallurgische Schichten, für die das Prozessgas mit unterschiedlicher Gaszusammensetzung verwendet wird, die Gaszusammensetzung jeweils derart gewählt wird, dass durch Gaszusammensetzung beeinflusste metallurgische Eigenschaften der jeweils benachbarten metallurgischen Schichten vorgegebene Unterschiede aufweisen. Eine Gaszusammensetzung zur Verwendung als Prozess-, Träger- und/oder Schleiergas in einem derartigen Verfahren sowie eine Kombination aus wenigstens zwei Gaszusammensetzungen ist ebenfalls Gegenstand der vorliegenden Erfindung.

## Beschreibung

Die Erfindung betrifft ein Verfahren zum schichtweisen Herstellen eines metallischen Werkstücks durch laserunterstützte additive Fertigung, insbesondere durch sogenannte Additive Laser Deposition, eine hierzu verwendbare Gaszusammensetzung sowie eine Kombination aus wenigstens zwei Gaszusammensetzungen.

### Stand der Technik

Im Zuge generativer bzw. additiver Fertigungsverfahren kann ein dreidimensionaler Gegenstand bzw. ein Werkstück schichtweise aus einem metallischen Werkstoff hergestellt werden. Das hergestellte Werkstück setzt sich aus unterschiedlichen metallurgischen Schichten zusammen, die im Zuge des additiven Fertigungsverfahrens einzeln nacheinander erzeugt werden. Für jede dieser metallurgischen Schichten des Werkstücks kann der metallische Werkstoff beispielsweise in Pulverform aufgebracht und verfestigt werden. Zu diesem Zweck kann der aufgebrachte Werkstoff beispielsweise mit einem Laser- und/oder Elektronenstrahl beaufschlagt werden. Der Werkstoff kann auf diese Weise beispielsweise einem Sinter- oder Schmelzprozess unterzogen werden, wodurch der Werkstoff verfestigt wird. Nach Erzeugen einer metallurgischen Schicht kann die nächste Schicht auf analoge Weise erzeugt werden.

Je nach Anwendungsgebiet werden additive Fertigungsverfahren auch als Rapid Prototyping bezeichnet. Im Zuge eines Rapid Prototypings können beispielsweise Werkzeuge, Werkstücke oder Bauelemente für unterschiedliche Zwecke hergestellt werden. Additive Fertigungsverfahren können in unterschiedlichen Gebieten Anwendung finden, beispielsweise in der Architektur, im Maschinenbau, in der Luft- und Raumfahrt, in der Medizintechnik oder in der Automobilindustrie.

Ein bekanntes additives Fertigungsverfahren ist die hier mit dem englischen Fachbegriff bezeichnete sogenannte Additive Laser Deposition. Hierbei wird der metallische Werkstoff pulverförmig in ein Schmelzbad eingebracht, welches durch einen Laserstrahl erzeugt wird. Der metallische Werkstoff wird dabei über eine Düse oder über Öffnungen konzentrisch zum Laserstrahl zugeführt, zumeist mit Hilfe eines Trägergases. Zudem wird zumeist ein weiteres Gas, das sogenannte Prozessgas, über eine Düse zugeführt. Diese Düse ist zumeist konzentrisch zum Laserstrahl angeordnet, der Laserstrahl ist somit von dem Prozessgas umgeben. Die Additive Laser Deposition wird daher auch als Düsentechnik bezeichnet. Die verwendete Düse für das Prozessgas kann beispielsweise ringförmig um den Laserstrahl angeordnete Öffnungen zum Austritt des Pulvers und des Trägergases aufweisen.

Die vorliegende Erfindung eignet sich für alle Verfahren zur laserunterstützten additiven Fertigung unter Verwendung eines metallischen Werkstoffs, der über eine Düse bereitgestellt und mit einem Laserstrahl beaufschlagt wird.

Das zu fertigende Werkstück kann beispielsweise auf einer Trägerplatte oder einem Lineartisch angeordnet sein. Die Trägerplatte bzw. der Lineartisch kann insbesondere in einer Ebene senkrecht zu dem Laserstrahl verschoben werden, um die jeweiligen metallurgischen Schichten zu erzeugen. Nach dem Erzeugen einer metallurgischen Schicht kann der Laserstrahl bzw. ein entsprechender Laserkopf bewegt werden, und die nächste Schicht kann auf analoge Weise erzeugt werden.

Der pulverförmige Werkstoff kann beispielsweise durch Gravitation in Richtung des Schmelzbads transportiert oder, wie erwähnt, in einen Strom eines geeigneten Trägergases eingebracht werden. Ferner kann ein weiterer Gasvorhang eines sogenannten Schleiergases erzeugt werden, indem ein zweckmäßiges Gas oder Gasgemisch in Richtung des Schmelzbads geführt wird. Zumeist wird dabei ein Inertgas (Argon, Helium) verwendet, welches keine Reaktion mit dem metallischen Werkstoff eingeht. Durch den Gasvorhang wird das herzustellende Werkstück bzw. das Schmelzbad abgeschirmt, beispielsweise vor anderen Gasen, und es kann verhindert werden, dass der aufgebrachte metallische Werkstoff verunreinigt oder ungewollt in seinen Eigenschaften beeinflusst wird.

Bei additiven Fertigungsverfahren der erläuterten Art besteht oftmals die Gefahr, dass in dem Werkstück sogenannte metallurgische Kerben entstehen. Als metallurgische Kerbe wird ein schlagartiger, harter Übergang zwischen Bereichen bzw. Schichten mit unterschiedlichen metallurgischen Eigenschaften bezeichnet. Die metallurgischen Eigenschaften des Werkstücks ändern sich bei derartigen metallurgischen Kerben demgemäß schlagartig. Diese Bereiche des Werkstücks können sich bei Belastung gegebenenfalls sehr unterschiedlich verhalten, was zu hohen mechanischen Spannungen bzw. Ungleichmäßigkeiten in dem Werkstück führen kann. An derartigen metallurgischen Kerben können daher sehr schnell Bruchstellen bzw. Defekte des Werkstücks entstehen.

Es ist daher wünschenswert, ein entsprechendes Verfahren dahingehend zu verbessern, dass ein Werkstück ohne metallurgische Kerben hergestellt werden kann.

### Offenbarung der Erfindung

Diese Aufgabe wird durch ein Verfahren zum schichtweisen Herstellen eines Werkstücks durch laserunterstützte additive Fertigung, insbesondere durch Additive Laser Deposition, mit den Merkmalen des Patentanspruchs 1 gelöst. Die Erfindung betrifft ferner eine Gaszusammensetzung mit den Merkmalen des Patentanspruchs 13 sowie eine Kombination aus wenigstens zwei Gaszusammensetzungen mit den Merkmalen des Patentanspruchs 15. Vorteilhafte Ausgestaltungen sind Gegenstand der jeweiligen Unteransprüche sowie der nachfolgenden Beschreibung.

Das hergestellte Werkstück setzt sich aus unterschiedlichen metallurgischen Schichten zusammen, die einzeln nacheinander erzeugt werden. Die einzelnen metallurgischen Schichten des Werkstücks werden jeweils erzeugt, indem für jede metallurgische Schicht eine Schicht eines pulverförmigen metallischen Werkstoffs bereitgestellt und mit einem Laserstrahl beaufschlagt wird. Der metallische Werkstoff wird bei dem Verfahren, wie bereits erwähnt, beispielsweise pulverförmig in ein Schmelzbad eingebracht, welches unter Verwendung des Laserstrahls erzeugt wird. Der pulverförmige metallische Werkstoff wird insbesondere mit Hilfe eines Trägergases dem Schmelzbad zugeführt. Hierbei wird der pulverförmige metallische Werkstoff (gegebenenfalls zusammen mit dem Trägergas) über eine Düse oder über Öffnungen konzentrisch zum Laserstrahl zugeführt.

Die einzelnen metallurgischen Schichten haben insbesondere eine Dicke im Bereich von 20 µm bis 100 µm. Das herzustellende Werkstück ist insbesondere auf einer Trägerplatte oder einem Lineartisch angeordnet, welcher in einer Ebene senkrecht zu dem Laserstrahl verschoben werden kann. Nach Erzeugen einer metallurgischen Schicht wird ein Laserstrahl bzw. ein entsprechender Laserkopf, welcher den Laserstrahl erzeugt, um die Dicke dieser erzeugten Schicht in vertikaler Richtung bewegt. Die nächste Schicht wird auf analoge Weise erzeugt.

Die Trägerplatte bzw. der Lineartisch kann insbesondere von einer Steuereinheit gesteuert werden. In dieser Steuereinheit können Daten wie beispielsweise CAD-Daten hinterlegt sein, welche das herzustellende Werkstück charakterisieren. Die Steuereinheit kann die Trägerplatte bzw. den Lineartisch basierend auf diesen Daten ansteuern und relativ zum Laserstrahl verfahren.

Wie grundsätzlich bekannt, wird im Rahmen des erfindungsgemäßen Verfahrens auch der jeweils mit dem Laserstrahl beaufschlagten Schicht des pulverförmigen metallischen Werkstoffs ein Prozessgas über eine Düse zugeführt. Diese Düse ist insbesondere konzentrisch zum Laserstrahl angeordnet, der Laserstrahl ist von dem Prozessgas umgeben. Prozessgas, Trägergas und pulverförmiger metallischer Werkstoff können insbesondere über dieselbe Düse zugeführt werden. Alternativ kann auch das Prozessgas über eine erste Düse und das Trägergas und der pulverförmige metallische Werkstoff über eine zweite Düse zugeführt werden. Weiterhin kann das Prozessgas auch über eine Düse zugeführt werden, welche ringförmig um den Laserstrahl angeordnete Öffnungen zum Austritt des pulverförmigen metallischen Werkstoffs und des Trägergases aufweist. Weiter insbesondere kann ein weiterer Gasvorhang eines sogenannten Schleiergases durch Zufuhr eines zweckmäßigen Gases oder Gasgemisches in Richtung des Schmelzbads erzeugt werden.

Die Erfindung zeichnet sich nun dadurch aus, dass das Prozessgas für unterschiedliche metallurgische Schichten des Werkstücks mit unterschiedlicher Gaszusammensetzung verwendet wird, und dass für jeweils benachbarte metallurgische Schichten, für die das Prozessgas mit unterschiedlicher Gaszusammensetzung verwendet wird, die Gaszusammensetzung jeweils derart gewählt wird, dass durch die Gaszusammensetzung beeinflusste metallurgische Eigenschaften der jeweils benachbarten metallurgischen Schichten vorgegebene Unterschiede aufweisen.

Für jede oder jeweils eine vorgegebene Zahl der metallurgischen Schichten des Werkstücks kann also eine Gaszusammensetzung verändert werden. Durch die jeweilige Gaszusammensetzung des Prozessgases werden metallurgische Eigenschaften der jeweiligen metallurgischen Schicht(en) des Werkstücks beeinflusst. Die Gaszusammensetzung für diese metallurgische(n) Schicht(en) wird vorteilhafterweise jeweils derart gewählt, dass sich metallurgische Eigenschaften von einer oder mehreren jeweils benachbarten metallurgischen Schichten des Werkstücks jeweils durch vorgegebene Kriterien unterscheiden.

Die Gaszusammensetzung wird insbesondere derart verändert, dass sich metallurgische Eigenschaften benachbarter metallurgischer Schichten des Werkstücks nicht schlagartig verändern, sondern vorteilhafterweise insgesamt kontinuierlich bzw. graduell, und dass weiter insbesondere keine "Sprünge" bzw. keine sprunghaften Änderungen in den metallurgischen Eigenschaften jeweils benachbarter metallurgischer Schichten auftreten.

### Vorteile der Erfindung

Ohne Beschränkung der Allgemeinheit wird nachfolgend zu Zwecken der Erläuterung die Erstreckungsrichtung erzeugter (flacher) Schichten als "Querausdehnung" des Werkstücks und die Richtung senkrecht dazu, also die Richtung, in der Schicht für Schicht aufgetragen wird, als "Längsausdehnung" des Werkstücks bezeichnet.

Durch die Erfindung wird es ermöglicht, dass in dem Werkstück keine metallurgischen Kerben entstehen. Entlang der gesamten Längsausdehnung des Werkstücks ändern sich die metallurgischen Eigenschaften nach vorgegebenen Kriterien. Somit wird insbesondere ein sanfter, fließender Übergang zwischen den metallurgischen Eigenschaften jeweils benachbarter metallurgischer Schichten gewährleistet. Die metallurgischen Eigenschaften jeweils benachbarter metallurgischer Schichten sind somit aufeinander abgestimmt bzw. aneinander angepasst, insbesondere über die komplette Längsausdehnung des Werkstücks.

Das gefertigte Werkstück weist somit eine anisotrope Verteilung von metallurgischen Eigenschaften auf. Jede metallurgische Schicht an sich weist zwar jeweils konstante, isotrope metallurgische Eigenschaften auf, so dass das gefertigte Werkstück auch entlang seiner Querausdehnung jeweils konstante, d.h. isotrope metallurgische Eigenschaften aufweist. Entlang seiner Längsausdehnung ändern sich die metallurgischen Eigenschaften jedoch und weisen eine anisotrope Verteilung auf.

Dennoch wird durch die Erfindung gewährleistet, dass die metallurgischen Eigenschaften entlang der Längsausdehnung des Werkstücks vorgegebenen Gesetzmäßigkeiten folgen und nicht willkürlich verteilt sind. Insbesondere wird durch die Erfindung gewährleistet, dass keine Sprünge bzw. sprunghaften Änderungen der metallurgischen Eigenschaften entlang der Längsausdehnung auftreten.

Je nach Wahl der Gaszusammensetzung reagiert der aufgebrachte metallische Werkstoff unterschiedlich mit dem Prozessgas und unterschiedliche metallurgische Eigenschaften können erzielt werden. Insbesondere wird das Prozessgas dabei in Form einer zweckmäßigen Prozessgasströmung in Richtung des aufgebrachten metallischen Werkstoffs zugeführt. Das Prozessgas wird somit direkt auf diejenigen Stellen des herzustellenden Werkstücks zugeführt, an welcher die metallurgischen Eigenschaften entsprechend verändert werden sollen.

Vorteilhafterweise wird die Gaszusammensetzung des verwendeten Prozessgases für jede der metallurgischen Schichten jeweils derart gewählt, dass eine Änderung der metallurgischen Eigenschaften entlang einer Ausbreitungsrichtung des Werkstücks, insbesondere entlang seiner Längsausdehnung, einem vorgegebenem Gradienten, einem vorgegebenem Profil und/oder einer vorgegebenen Verteilung folgt. Durch diesen Gradienten, dieses Profil bzw. diese Verteilung wird insbesondere gewährleistet, dass keine metallurgischen Kerben in dem Werkstück auftreten.

Vorzugsweise wird die Gaszusammensetzung für jede oder mehrere der metallurgischen Schichten jeweils derart gewählt, dass die metallurgischen Eigenschaften der jeweiligen metallurgischen Schicht(en) jeweils auf vorgegebene Werte eingestellt werden. Durch die Wahl der Gaszusammensetzung werden somit die metallurgischen Eigenschaften jeder metallurgischen Schicht gezielt beeinflusst. Somit können die metallurgischen Eigenschaften benachbarter metallurgischer Schichten besonders einfach aneinander angepasst bzw. aufeinander abgestimmt werden. Insbesondere hängt der eingestellte Wert einer metallurgischen Eigenschaft einer speziellen metallurgischen Schicht jeweils von dem eingestellten Wert dieser metallurgischen Eigenschaft der jeweils benachbarten metallurgischen Schicht ab.

Bevorzugt wird die Gaszusammensetzung für jede oder mehrere der metallurgischen Schicht(en) jeweils derart gewählt, dass die Werte der metallurgischen Eigenschaften jeweils benachbarter metallurgischer Schichten jeweils maximal um einen vorgegebenen Schwellwert voneinander abweichen. Dieser Schwellwert wird insbesondere derart gewählt, dass zwischen den jeweils benachbarten metallurgischen Schichten keine metallurgische Kerbe entsteht. Vorzugsweise beträgt dieser Schwellwert 5%, weiter insbesondere 2,5%, weiter insbesondere 1 % einer oder mehrerer metallurgischer Eigenschaften (siehe unten zu hierbei verwendbaren metallurgischen Eigenschaften).

Durch zweckmäßige Wahl des Schwellwerts kann insbesondere ein sanfter, fließender Übergang zwischen den metallurgischen Eigenschaften jeweils benachbarter metallurgischer Schichten gewährleistet werden. Weiterhin wird durch zweckmäßige Wahl des Schwellwerts gewährleistet, dass die Änderung der metallurgischen Eigenschaften entlang der Ausbreitungsrichtung bzw. Längsachse des Werkstücks, dem entsprechenden Gradienten, Profil bzw. der entsprechenden Verteilung folgt.

Bevorzugt wird der pulverförmige metallische Werkstoff mit Hilfe eines Trägergases bereitgestellt und/oder ein Gasvorhang aus einem Schleiergas wird erzeugt. Weiter bevorzugt werden das Prozessgas und das Trägergas und/oder das Schleiergas für unterschiedliche metallurgische Schichten des Werkstücks mit jeweils unterschiedlicher Gaszusammensetzung verwendet. Die Gaszusammensetzungen des Prozessgases und des Trägergases und/oder des Schleiergases werden bevorzugt in Abhängigkeit voneinander gewählt, insbesondere derart, dass durch die Gaszusammensetzungen beeinflusste metallurgische Eigenschaften der jeweils benachbarten metallurgischen Schichten die vorgegebenen Unterschiede aufweisen.

Die Gaszusammensetzungen des Prozessgases, des Trägergases und/oder des Schleiergases werden somit insbesondere derart aufeinander abgestimmt, dass die gewünschten metallurgischen Eigenschaften der einzelnen metallurgischen Schichten erzielt werden. Die Gaszusammensetzung des Prozessgases kann insbesondere unterschiedlich zu den Gaszusammensetzungen des Trägergases und des Schleiergases sein. Alternativ kann auch für Prozessgas, Trägergas und Schleiergas jeweils dieselbe Gaszusammensetzung verwendet werden.

Ob für Prozessgas, Trägergas und Schleiergas jeweils unterschiedliche oder dieselbe Gaszusammensetzung verwendet wird, hängt insbesondere von unterschiedlichen Eigenschaften des Fertigungsprozesses ab, beispielsweise von der Prozessgeschwindigkeit, von der eingebrachten Energie, von dem Volumen des erhitzten Materials und/oder von der Reaktivität des metallischen Werkstoffs.

Wie weiter oben erläutert, können Trägergas, pulverförmiger metallischer Werkstoff und Prozessgas über eine gemeinsame Düse koaxial zu dem Laserstrahl eingebracht werden. Durch eine derartige kombinierte Zufuhr des Trägergases und des Prozessgases können auf einfache, aufwandsarme und kostengünstige Weise die metallurgischen Eigenschaften der kompletten jeweiligen metallurgischen Schicht entsprechend verändert werden.

Bevorzugt wird durch die jeweilige Gaszusammensetzung des Prozessgases bzw. durch die in Abhängigkeit voneinander gewählten Gaszusammensetzungen des Prozessgases, des Trägergases und/oder des Schleiergases eine Verbesserung von bestimmten (positiven) metallurgischen Eigenschaften des Werkstücks erzielt. Weiterhin können dadurch negative, unerwünschte metallurgische Eigenschaften oder Effekte des Werkstücks verringert bzw. vermieden werden.

Vorzugsweise wird für die metallurgischen Schichten die Gaszusammensetzung des Prozessgases jeweils derart gewählt, dass die metallurgischen Eigenschaften der jeweiligen metallurgischen Schichten beeinflusst werden. Als Trägergas und/oder als Schleiergas wird für die metallurgischen Schichten hingegen vorzugsweise jeweils ein reines Inertgas oder ein Gasgemisch mit wenigstens einem Inertgas als Gaskomponente zugeführt.

Bevorzugt werden durch die jeweilige Gaszusammensetzung(en) eine Kriechfestigkeit, eine Härte, eine Steifigkeit, eine thermische Leitfähigkeit, eine elektrische Leitfähigkeit, ein Schmelzpunkt, eine Korrosionsbeständigkeit, eine Abnutzungs- bzw. Verschleißbeständigkeit, eine Duktilität, elektromagnetische Eigenschaften und/oder eine Porosität als metallurgische Eigenschaften der jeweiligen metallurgischen Schichten des Werkstücks verändert.

Bevorzugt wird das Werkstück aus einem niedrig schmelzenden Metall hergestellt. Zu diesem Zweck wird für jede metallurgische Schicht jeweils das niedrig schmelzende Metall als metallischer Werkstoff bereitgestellt. Als niedrig schmelzende Metalle werden hierbei Metalle angesehen, die einen Schmelzpunkt von maximal 1500 °C aufweisen, bevorzugt von maximal 1200 °C, weiter bevorzugt von maximal 1000 °C und mindestens 500 °C. Beispielsweise werden Aluminium, Zinn, Blei, Zink und/oder Silber bzw. entsprechende Mischungen bzw. Legierungen als niedrig schmelzende Metalle verwendet. Entsprechende Legierungen können auch aus unterschiedlichen metallischen Werkstoffen erzeugt werden, indem unterschiedliche Komponentengemische eingebracht werden.

Weiter bevorzugt wird das Werkstück nicht aus einem Refraktärmetall bzw. einem hoch schmelzenden Metall hergestellt. Demgemäß wird bevorzugt Refraktärmetall bzw. kein hoch schmelzendes Metall als metallischer Werkstoff aufgeschmolzen. Refraktärmetalle bzw. hoch schmelzende Metalle weisen insbesondere einen Schmelzpunkt von mindestens 1500 °C auf. Bei derartig hohen Temperaturen verhalten sich Gase anders, als bei vergleichsweise niedrigen Temperaturen von insbesondere maximal 1500 °C. Eigenschaften von Gasen sowie ablaufende Reaktionen sind bei derartig hohen und derartig niedrigen Temperaturen deutlich unterschiedlich. Insbesondere gelten bei den hohen Temperaturen andere Gesetze der Thermodynamik als bei derartig niedrigen Temperaturen. Bei hohen Temperaturen ist es insbesondere sehr viel aufwendiger, spezielle metallurgische Eigenschaften der metallurgischen Schichten zu erzeugen, als bei niedrigen Temperaturen. Es ist jedoch möglich, Refraktärmetalle oder andere Komponenten, beispielsweise zur Herstellung von besonders abriebfesten Werkstücken, in eine Matrix aus niedrig schmelzenden Metallen einzubetten, beispielsweise um Verbundmaterialien zu schaffen.

Insgesamt umfasst das Werkstück damit jedoch bevorzugt ein niedrig schmelzendes Metall und das selektive Laserschmelzen wird bevorzugt bei niedrigen Temperaturen von maximal 1500 °C, weiter bevorzugt von maximal 1200 °C, weiter bevorzugt von maximal 1000 °C, durchgeführt. Bei derartig niedrigen Temperaturen kann das Werkstück einfach, aufwandsarm und kostengünstig hergestellt werden.

Gemäß einer bevorzugten Ausgestaltung wird für unterschiedliche metallurgische Schichten unterschiedlicher pulverförmiger metallischer Werkstoff bereitgestellt. Das Werkstück kann somit insbesondere aus unterschiedlichen Werkstoffen (Legierungen) aufgebaut werden. Der metallische Werkstoff bzw. die Zusammensetzung des verwendeten metallischen Pulvers kann zweckmäßig von einer metallurgischen Schicht zur nächsten metallurgischen Schicht verändert werden.

Falls nur oder zumindest im Wesentlichen inertes Gas bzw. inerte Gase als Prozessgas, Trägergas und Schleiergas zugeführt werden, kann der Wechsel des metallischen Werkstoffs insbesondere ohne Veränderung dieser jeweiligen Gaszusammensetzungen durchgeführt werden. Falls jedoch reaktives Gas für eine der Gaszusammensetzungen verwendet wird, wird die jeweilige Gaszusammensetzung insbesondere an den geänderten metallischen Werkstoff angepasst.

Vorteilhafterweise wird die Gaszusammensetzung des Prozessgases in Abhängigkeit von dem metallischen Werkstoff der jeweiligen metallurgische Schicht jeweils derart gewählt, dass durch die Gaszusammensetzung die metallurgischen Eigenschaften der jeweiligen metallurgischen Schicht beeinflusst werden. Die Gaszusammensetzung des Prozessgases, welches vorzugsweise wenigstens ein reaktives Gas als Gaskomponente umfasst, wird somit an den metallischen Werkstoff der einzelnen metallurgischen Schichten angepasst. Auf diese Weise können in das Werkstück unterschiedliche Schichtbereiche aus unterschiedlichen Metallen eingearbeitet werden.

Beispielsweise kann zunächst eine bestimmte Anzahl von metallurgischen Schichten des Werkstücks jeweils aus einem austenitischen, hochlegierten Stahl gefertigt werden. Beispielsweise kann für diese metallurgischen Schichten aus austenitischem, hochlegiertem Stahl jeweils eine Gaszusammensetzung aus Argon, Wasserstoff und/oder Stickstoff als Prozessgas zugeführt werden. Durch derartige Prozessgase kann insbesondere eine Oxidation der einzelnen metallurgischen Schichten auf ein Minimum reduziert werden und eine Korrosionsbeständigkeit der einzelnen metallurgischen Schichten kann erhöht bzw. jeweils auf einen bestimmten Wert eingestellt werden.

Nach einer spezifischen metallurgischen Schicht wird der metallische Werkstoff verändert. Nach dieser spezifischen metallurgischen Schicht wird eine bestimmte zweite Anzahl von metallurgischen Schichten des Werkstücks beispielsweise jeweils aus einer ferritischen Chromlegierung gefertigt. Da für einen derartigen Werkstoff eine Gaszusammensetzung mit Wasserstoff schädlich wäre, wird in Abhängigkeit dieses metallischen Werkstoffs die Gaszusammensetzung des Prozessgases verändert. Als Prozessgas wird daher für diese zweite Anzahl von metallurgischen Schichten jeweils eine wasserstofffreie Gaszusammensetzung als Prozessgas verwendet, beispielsweise Argon oder ein Argon-Helium-Gemisch oder ein Argon-Stickstoff-Gemisch.

Vorzugsweise wird für die metallurgischen Schichten als Prozessgas jeweils ein reines Reaktivgas verwendet oder ein Gasgemisch mit wenigstens einem Reaktivgas als Gaskomponente. Insbesondere wird ein Gasgemisch verwendet, das ausschließlich unterschiedliche Reaktivgase als Gaskomponenten aufweist. Durch die Konzentration der einzelnen Reaktivgase des Prozessgases werden insbesondere die gewünschten metallurgischen Eigenschaften der jeweiligen metallurgischen Schicht erzeugt. Vorzugsweise werden in dem Zusatzgas Wasserstoff, Sauerstoff, Kohlendioxid, Kohlenmonoxid, Stickstoff und/oder Kohlenwasserstoffe als Reaktivgase zugeführt.

Beispielsweise können durch die Verwendung von Stickstoff in der Gaszusammensetzung die Kriechfestigkeit, Härte und/oder Steifigkeit als metallurgische Eigenschaften der jeweiligen metallurgischen Schichten des Werkstücks verändert werden. Insbesondere werden durch den Stickstoff in den jeweiligen metallurgischen Schichten Nitride erzeugt, welche zu erhöhter Kriechfestigkeit, Härte und/oder Steifigkeit führen.

Durch die Verwendung von Kohlendioxid in der Gaszusammensetzung können in der in den jeweiligen metallurgischen Schichten beispielsweise Karbide erzeugt werden. Durch Kohlendioxid in der Gaszusammensetzung können Härte und/oder Abnutzungs- bzw. Verschleißbeständigkeit als metallurgische Eigenschaften der jeweiligen metallurgischen Schichten des Werkstücks verändert werden.

Durch die Verwendung von Sauerstoff in der Gaszusammensetzung können in den jeweiligen metallurgischen Schichten Oxide, insbesondere Metalloxide erzeugt werden. Auf diese Weise kann insbesondere die Duktilität bzw. Dehnbarkeit und Verformbarkeit als metallurgische Eigenschaften der jeweiligen metallurgischen Schichten des Werkstücks verändert werden.

Beispielsweise können durch Verwendung von Wasserstoff in der Gaszusammensetzung spröde, brüchige Schichten des Werkstücks erzeugt werden. Auf diese Weise können beispielsweise Sollbruchstellen in dem Werkstück erzeugt werden.

Vorteilhafterweise wird eine Gaszusammensetzung verwendet, die weniger Sauerstoff als Luft unter Normalbedingungen enthält. Weiter bevorzugt beträgt der Anteil an Sauerstoff der Gaszusammensetzung zwischen 0,01% und 25%. Durch eine derartige Gaszusammensetzung kann verhindert werden, dass es zu örtlich erhöhten Sauerstoffkonzentrationen und somit zu einer erhöhten Brand- bzw. Explosionsgefahr kommt. Gaszusammensetzungen mit derartigem Sauerstoffanteil eignen sich besonders, um eine kontrollierte Oxidation bzw. kontrollierte Reaktionen zu ermöglichen. Somit können gewünschte metallurgische Eigenschaften der jeweiligen metallurgischen Schichten eingestellt werden.

Bevorzugt wird eine Gaszusammensetzung verwendet, wobei ein Anteil an brennbaren oder explosiven Gasen geringer ist, als die untere Zündgrenze des jeweiligen Gases in Luft. Als brennbare oder explosive Gase werden insbesondere Wasserstoff und/oder Kohlenwasserstoffe verwendet. Beispielsweise ergeben sich somit ein maximaler Anteil an Wasserstoff von 4% und/oder ein maximaler Anteil an Acetylen von 2,5%.

Vorzugsweise wird eine Gaszusammensetzung mit einem maximalen Anteil an Kohlenmonoxid von 30 ppm und/oder mit einem maximalen Anteil an Kohlendioxid von 5000 ppm für die Gasatmosphäre verwendet. Durch diese Gaszusammensetzung kann verhindert werden, dass ein Benutzer oder Mitarbeiter gesundheitliche Schäden erleidet.

Zu den Merkmalen und Vorteilen der erfindungsgemäß ebenfalls vorgeschlagenen Gaszusammensetzung sowie der Kombination aus wenigstens zwei Gaszusammensetzungen wird auf die obigen Erläuterungen ausdrücklich verwiesen.

## Patentansprüche

1. Verfahren zum schichtweisen Herstellen eines metallischen Werkstücks durch additive Fertigung, bei dem metallurgische Schichten des Werkstücks erzeugt werden, indem für jede metallurgische Schicht ein pulverförmiger metallischer Werkstoff bereitgestellt und mit einem Laserstrahl beaufschlagt wird, wobei der jeweils mit dem Laserstrahl beaufschlagten Schicht des pulverförmigen metallischen Werkstoffs ein Prozessgas über eine Düse zugeführt wird, **dadurch gekennzeichnet, dass** das Prozessgas für unterschiedliche metallurgische Schichten des Werkstücks mit unterschiedlicher Gaszusammensetzung verwendet wird und dass für jeweils benachbarte metallurgische Schichten, für die das Prozessgas mit unterschiedlicher Gaszusammensetzung verwendet wird, die Gaszusammensetzung jeweils derart gewählt wird, dass durch die Gaszusammensetzung beeinflusste metallurgische Eigenschaften der jeweils benachbarten metallurgischen Schichten vorgegebene Unterschiede aufweisen.

2. Verfahren nach Anspruch 1, wobei die Gaszusammensetzung des Prozessgases jeweils derart gewählt wird, dass eine Änderung der metallurgischen Eigenschaften des Werkstücks senkrecht zu einer Erstreckung der metallurgischen Schichten einem vorgegebenem Gradienten, einem vorgegebenen Profil und/oder einer vorgegebenen Verteilung folgt.

3. Verfahren nach Anspruch 1 oder 2, wobei die Gaszusammensetzung des Prozessgases jeweils derart gewählt wird, dass die Werte der metallurgischen Eigenschaften der benachbarten metallurgische Schichten, für die das Prozessgas mit unterschiedlicher Gaszusammensetzung verwendet wird, jeweils maximal um einen vorgegebenen Schwellwert voneinander abweichen.

4. Verfahren nach einem der vorstehenden Ansprüche, wobei die Düse, über die das Prozessgas zugeführt wird, konzentrisch zum Laserstrahl angeordnet ist.

5. Verfahren nach einem der vorstehenden Ansprüche, wobei der pulverförmige metallische Werkstoff mit Hilfe eines Trägergases bereitgestellt wird und/oder wobei ein Gasvorhang aus einem Schleiergas erzeugt wird.

6. Verfahren nach Anspruch 5, wobei das Prozessgas und das Trägergas und/oder das Schleiergas für unterschiedliche metallurgische Schichten des Werkstücks mit jeweils unterschiedlicher Gaszusammensetzung verwendet werden und für jeweils benachbarte metallurgische Schichten, für die das Prozessgas und das Trägergas und/oder das Schleiergas mit unterschiedlicher Gaszusammensetzung verwendet werden, die Gaszusammensetzungen des Prozessgases, des Trägergases und/oder des Schleiergases derart in Abhängigkeit voneinander gewählt werden, dass durch die Gaszusammensetzungen beeinflusste metallurgische Eigenschaften der jeweils benachbarten metallurgischen Schichten die vorgegebenen Unterschiede aufweisen.

7. Verfahren nach Anspruch 5 oder 6, wobei für die metallurgischen Schichten die Gaszusammensetzung des Prozessgases jeweils derart gewählt wird, dass durch die Gaszusammensetzung die metallurgischen Eigenschaften der jeweiligen metallurgischen Schichten beeinflusst werden und wobei für die metallurgischen Schichten als Trägergas und/oder als Schleiergas jeweils ein reines Inertgas oder ein Gasgemisch mit wenigstens einem Inertgas als Gaskomponente zugeführt wird.

8. Verfahren nach einem der vorstehenden Ansprüche, wobei durch die jeweilige Gaszusammensetzung des Prozessgases eine Kriechfestigkeit, eine Härte, eine Steifigkeit, eine thermische Leitfähigkeit, eine elektrische Leitfähigkeit, ein Schmelzpunkt, eine Korrosionsbeständigkeit, eine Abnutzungsbeständigkeit, eine Verschleißbeständigkeit, eine Duktilität, elektromagnetische Eigenschaften und/oder eine Porosität als metallurgische Eigenschaften der jeweiligen metallurgischen Schichten des Werkstücks beeinflusst werden.

9. Verfahren nach einem der vorstehenden Ansprüche, wobei als Prozessgas für die metallurgischen Schichten jeweils ein reines Reaktivgas oder ein Gasgemisch mit wenigstens einem Reaktivgas als Gaskomponente zugeführt wird, wobei als Reaktivgas Wasserstoff, Sauerstoff, Stickstoff, Kohlenmonoxid, Kohlendioxid und/oder Kohlenwasserstoffe verwendet werden.

10. Verfahren nach einem der vorstehenden Ansprüche, wobei jeweils niedrig schmelzendes Metall mit einem Schmelzpunkt von maximal 1500 insbesondere von maximal 1200 weiter insbesondere von maximal 1000 als metallischer Werkstoff verwendet wird.

11. Verfahren nach einem der vorstehenden Ansprüche, wobei für unterschiedliche metallurgische Schicht unterschiedlicher metallischer Werkstoff pulverförmig bereitgestellt wird.

12. Verfahren nach Anspruch 11, wobei die Gaszusammensetzung des Prozessgases in Abhängigkeit des metallischen Werkstoffs der jeweiligen metallurgischen Schicht jeweils derart gewählt wird, dass durch die Gaszusammensetzung die metallurgischen Eigenschaften der jeweiligen metallurgischen Schicht beeinflusst werden.

13. Gaszusammensetzung zur Verwendung als Prozess-, Träger- und/oder Schleiergas in einem Verfahren nach einem der vorstehenden Ansprüche, wobei die Gaszusammensetzung ein reines Reaktivgas oder ein Gasgemisch mit wenigstens einem Reaktivgas als Gaskomponente enthält, wobei Wasserstoff, Sauerstoff, Stickstoff, Kohlendioxid und/oder Kohlenwasserstoffe als Reaktivgas vorgesehen sind.

14. Gaszusammensetzung nach Anspruch 13, mit einem Anteil an Sauerstoff zwischen 0,01% und 21% und/oder einem Anteil an brennbaren oder explosiven Gasen, insbesondere an Wasserstoff und/oder Kohlenwasserstoffen, der geringer ist, als die untere Zündgrenze des jeweiligen Gases in Luft und/oder mit einem maximalen Anteil an Kohlenmonoxid von 30 ppm und/oder mit einem maximalen Anteil an Kohlendioxid von 5000 ppm.

15. Kombination aus wenigstens zwei Gaszusammensetzungen zur Verwendung in einem Verfahren nach einem der Ansprüche 1 bis 12, wobei zumindest eine der Gaszusammensetzungen eine Gaszusammensetzung nach Anspruch 13 oder 14 ist und zur Verwendung als Träger-, Prozess- oder Schleiergas bestimmt ist.
